(19) Europäisches Patentamt
European Patent Office
Office européen des brevets

(11) Numéro de publication : **0 512 895 A1**

# (12) DEMANDE DE BREVET EUROPEEN

(21) Numéro de dépôt : **92401217.2**

(51) Int. Cl.$^5$ : **C01B 6/21,** A23L 3/3436

(22) Date de dépôt : **29.04.92**

(30) Priorité : **02.05.91 FR 9105402**

(43) Date de publication de la demande :
**11.11.92 Bulletin 92/46**

(84) Etats contractants désignés :
**BE DE GB**

(71) Demandeur : **COMMISSARIAT A L'ENERGIE ATOMIQUE**
**31-33, rue de la Fédération**
**F-75015 Paris (FR)**

(72) Inventeur : **Lorthioir, Stéphane**
**7, Impasse de la Ferme, Quincampoix**
**F-91600 Savigny sur Orge (FR)**
Inventeur : **Humbert-Droz, Claude**
**120 Chemin du Bois-Chaperon**
**F-91640 Briis-sous-Forges (FR)**
Inventeur : **Trennoy, Serge**
**60 rue Gaston Navailles**
**F-93330 Neuilly sur Marne (FR)**

(74) Mandataire : **Mongrédien, André et al**
**c/o BREVATOME 25, rue de Ponthieu**
**F-75008 Paris (FR)**

## (54) Procédé de préparation d'un borohydrure de métal alcalin tel que le borohydrure de lithium.

(57) L'invention concerne un procédé de préparation d'un borohydrure de métal alcalin.

Selon ce procédé, on porte à une température de 250 à 300°C, sous atmosphère d'hydrogène, un mélange d'hydrure de métal alcalin, d'anhydride borique et d'un catalyseur d'hydrogénation tel que le nickel de Raney. On obtient ainsi un borohydrure de métal alcalin tel que le borohydrure de lithium, selon la réaction suivante :

$$4LiH + B_20_3 \rightarrow LiBH_4 + Li_3B0_3,$$

avec un rendement qui peut atteindre 93,3% à une température de 300°C.

EP 0 512 895 A1

La présente invention a pour objet un procédé de préparation d'un borohydrure de métal alcalin, en particulier de borohydrure de lithium.

Les borohydrures de métaux alcalins sont des produits intéressants, notamment en tant qu'intermédiaires pour la préparation du diborane, composé fondamental de la chimie des boranes qui sont utilisables en particulier comme constituants de haute énergie pour carburants spéciaux et comme réactifs dans la synthèse organique moderne.

Un procédé connu de préparation de borohydrures de sodium utilise comme produit de départ l'hydrure du métal alcalin correspondant, comme il est décrit par Schlesinger et al dans J. Am. Chem. Soc., 1953, vol. 75, p. 205 à 209. Ce procédé consiste à faire réagir l'hydrure de sodium avec du borate de méthyle ou de l'oxyde borique. Dans le cas de l'oxyde borique où le schéma réactionnel est le suivant :

$$4NaH + 2B_20_3 \rightarrow 3NaB_2 + NaBH_4$$

on effectue la réaction à une température de 330 à 350°C, pendant 20 à 48 heures. Ainsi, comme il est indiqué à la page 208 de ce document, il est nécessaire d'opérer à une température supérieure à 300°C pour obtenir un rendement acceptable en borohydrure de sodium.

Pour la préparation de borohydrure de lithium, la pratique habituelle est de partir du borohydrure de sodium et de faire réagir celui-ci avec un halogénure de lithium tel que LiBr ou LiCl dans un solvant organique approprié, comme il est décrit dans Inorg. Chem., 1981, 20, p. 4454-4456 et Inorg. Chem., 1982, 21, p. 3657.

Ainsi, les procédés connus de préparation de borohydrure de sodium et de borohydrure de lithium font appel à des mécanismes réactionnels différents.

La présente invention a précisément pour objet un procédé de préparation d'un borohydrure de métal alcalin notamment de borohydrure de lithium, basé sur la réaction d'un hydrure du métal alcalin avec de l'anhydride borique, qui conduit à des rendements plus élevés que ceux. que l'on obtient dans le cas du procédé connu de préparation de $NaBH_4$ où le rendement n'est que de 51%.

Selon l'invention, le procédé de préparation d'un borohydrure de métal alcalin par réaction de l'hydrure du métal alcalin avec de l'anhydride borique se caractérise en ce que l'on effectue la réaction en présence d'hydrogène, et d'un catalyseur d'hydrogénation.

Le fait d'utiliser une atmosphère d'hydrogène, par exemple une pression partielle d'hydrogène de 0,1 à 1MPa, et un catalyseur d'hydrogénation permet ainsi de réaliser la réaction selon le schéma réactionnel suivant :

$$4MH + B_20_3 \rightarrow MBH_4 + M_3B0_3$$

dans lequel M est le métal alcalin,

qui est bien différent des schémas réactionnels décrits par Schlesinger et al dans le document précité et peut être réalisé avec un rendement élevé en borohydrure à des températures plus basses que celles utilisées par Schlesinger et al.

Les catalyseurs utilisés dans le procédé de l'invention sont des catalyseurs d'hydrogénation classique, de préférence sous forme de poudre finement divisée.

A titre d'exemple de tels catalyseurs, on peut citer le nickel de Raney, le platine, le palladium et les zéolithes au lanthane.

Pour la mise en oeuvre du procédé de l'invention, on effectue de préférence les étapes suivantes :

a) mélanger une poudre de l'hydrure du métal alcalin avec de la poudre d'anhydride borique et une poudre du catalyseur d'hydrogénation,

b) introduire le mélange de poudres dans un four,

c) porter le mélange dans le four à une température de 250 à 350°C sous atmosphère d'hydrogène pendant 12 à 72h, et

d) séparer le borohydrure de métal alcalin produit.

Dans la première étape, on mélange de la poudre d'hydrure du métal alcalin avec de la poudre d'anhydride borique et le catalyseur, en utilisant de préférence des quantités d'hydrure et d'anhydride borique telles qu'elles correspondent sensiblement à 4mol d'hydrure du métal alcalin par mol d'anhydride borique et en ajoutant environ 5 à 10% en poids du catalyseur d'hydrogénation. On peut réaliser le mélange dans un flacon en polypropylène contenant une certaine quantité de billes en alumine pour obtenir un mélange homogène.

Après préparation du mélange, on introduit celuici dans un four, par exemple dans un creuset en fer Armco®. On peut utiliser différents types de fours, en particulier des fours statiques et des fours rotatifs. Lorsqu'on utilise un four statique, il est nécessaire d'opérer sous une pression d'hydrogène élevée, par exemple de 0,1 à 1MPa, pour obtenir un rendement satisfaisant.

Toutefois, on peut opérer avec un four statique sous une pression d'hydrogène faible, par exemple d'environ 0,1MPa à condition de réaliser une agitation du mélange dans le four.

Dans le cas où l'on utilise un four rotatif, on peut employer une pression partielle d'hydrogène faible, par exemple d'environ 0,1MPa.

On porte ensuite le mélange dans le four à la température voulue, pendant une durée qui peut varier de 12 à 72h.

La durée est choisie en particulier en fonction de la température et de la pression d'hydrogène utilisées, de façon à obtenir un rendement élevé.

Après réaction, on sépare le borohydrure de métal alcalin produit en l'extrayant sélectivement du produit de la réaction dans un solvant approprié, par exemple de l'éther éthylique, du tétrahydrofuranne ou de l'isopropylamine.

Ceci peut être effectué en plaçant le produit de la

réaction présent dans le creuset sorti du four, dans un ballon tricol sous atmosphère neutre, ayant par exemple une humidité résiduelle inférieure à 40ppm, puis en ajoutant de l'éther éthylique préalablement séché par de l'hydrure de lithium-aluminium de manière à extraire sélectivement, sous reflux et sous agitation, le borohydrure du métal alcalin. Après dissolution du borohydrure dans l'éther éthylique, on filtre la solution de manière à en extraire les particules solides. On peut récupérer ensuite le borohydrure par évaporation directe de l'éther éthylique. Généralement, on réalise ensuite un traitement thermique à une température de 50 à 200°C et sous une pression d'environ 0,135Pa pour purifier le borohydrure du métal alcalin.

Les exemples suivants, donnés bien entendu à titre non limitatif, illustrent la mise en oeuvre du procédé de l'invention pour la préparation du borohydrure de lithium à partir d'hydrure de lithium.

## Exemple 1.

Dans cet exemple, on mélange de la poudre d'hydrure de lithium ayant une granulométrie moyenne de 50µm et de la poudre d'oxyde borique ayant une granulométrie moyenne de 90µm de façon à avoir un rapport molaire $LiH/B_2O_3$ de 4 et on ajoute au mélange 10% en poids de nickel de Raney. On introduit ensuite le mélange dans le creuset d'un four fixe, et on le maintient dans le four sous une pression d'hydrogène de 0,7MPa, à une température de 350°C, pendant 72 heures.

On extrait ensuite le borohydrure de lithium produit dans le four en plaçant dans un ballon tricol les produits de la réaction et en ajoutant de l'éther éthylique pour réaliser la dissolution sous reflux et sous agitation. Après dissolution, on filtre la solution et on récupère le borohydrure de lithium par évaporation directe de l'éther éthylique. On le désolvate ensuite par un traitement thermique à 100°C, sous une pression de 0,135Pa.

On évalue ensuite la pureté du borohydrure de lithium ainsi produit en mesurant l'hydrogène actif dégagé lors de l'hydrolyse du composé en milieu acide selon la réaction :

$$LiBH_4 + 2H_2O \xrightarrow{H^+} LiBO_2 + 4\ H_2$$

On trouve que la pureté est supérieure à 99,5%.

La quantité de borohydrure de lithium produite correspond à un rendement de 59,3% par rapport à l'hydrure de lithium de départ.

## Exemple comparatif 1.

On suit le même mode opératoire que dans l'exemple 1 pour préparer le borohydrure de lithium, sauf que l'on n'ajoute pas de catalyseur au mélange réactionnel.

Dans ces conditions, la pureté du produit est également supérieure à 99,5%, mais le rendement n'est que de 14%.

## Exemple 2.

Dans cet exemple, on suit le même mode opératoire que dans l'exemple 1, mais on réalise la réaction à une température de 300°C, pendant 72 heures.

Dans ces conditions, le rendement est de 85,6% et l'on obtient du borohydrure de lithium ayant un degré de pureté supérieur à 99,5% comme dans l'exemple 1.

En comparant les résultats des exemples 1 et 2, on constate que l'on obtient un rendement supérieur en opérant seulement à une température de 300°C.

## Exemple 3.

Dans cet exemple, on suit le même mode opératoire que dans l'exemple 2, mais on réalise la réaction à 300°C pendant 48h au lieu de 72h.

Dans ces conditions, le rendement est de 93,3% et l'on obtient du borohydrure de lithium ayant également un degré de pureté supérieur à 99,5%.

En comparant les résultats des exemples 2 et 3, on constate que l'on obtient un rendement supérieur en réalisant la réaction pendant 48h au lieu de 72h.

Ainsi, le procédé de l'invention est très intéressant car il permet d'obtenir des rendements supérieurs à ceux obtenus avec les procédés connus, en utilisant des températures inférieures, en particulier grâce à l'emploi d'un catalyseur d'hydrogénation.

Bien que les exemples donnés ci-dessus concernent uniquement le lithium, le procédé de l'invention s'applique de la même façon aux autres métaux alcalins, par exemple au sodium et au potassium.

## Revendications

1. Procédé de préparation d'un borohydrure de métal alcalin par réaction de l'hydrure du métal alcalin avec de l'anhydride borique, caractérisé en ce que l'on effectue la réaction en présence d'hydrogène et d'un catalyseur d'hydrogénation.

2. Procédé selon la revendication 1, caractérisé en ce que le catalyseur est du nickel de Raney.

3. Procédé selon l'une quelconque des revendications 1 et 2, caractérisé en ce que l'on réalise la réaction sous une pression partielle d'hydrogène de 0,1 à 1MPa.

4. Procédé selon l'une quelconque des revendications 1 à 3, caractérisé en ce qu'il comprend les étapes suivantes :

a) mélanger une poudre de l'hydrure de métal alcalin avec de la poudre d'anhydride borique et une poudre du catalyseur d'hydrogénation,
b) introduire le mélange de poudres dans un four,
c) porter le mélange dans le four à une température de 250 à 350°C sous atmosphère d'hydrogène pendant 12 à 72h, et
d) séparer le borohydrure de métal alcalin produit.

**5.** Procédé selon la revendication 4, caractérisé en ce que l'on utilise un four statique et une pression d'hydrogène de 0,1 à 1MPa.

**6.** Procédé selon la revendication 4, caractérisé en ce que l'on utilise un four statique sous agitation et une pression d'hydrogéne d'environ 0,1MPa.

**7.** Procédé selon la revendication 4, caractérisé en ce que l'on utilise un four rotatif et une pression d'hydrogène d'environ 0,1MPa.

**8.** Procédé selon l'une quelconque des revendications 1 à 7, caractérisé en ce que l'on sépare le borohydrure de métal alcalin par extraction sélective dans de l'éther éthylique.

**9.** Procédé selon la revendication 8, caractérisé en ce que l'on soumet ensuite le borohydrure du métal alcalin à un traitement thermique de désolvatation, à une température de 50 à 200°C sous une pression d'environ 0,135Pa.

**10.** Procédé selon l'une quelconque des revendications 1 à 9, caractérisé en ce que le métal alcalin est le lithium.

Office européen des brevets

# RAPPORT DE RECHERCHE EUROPEENNE

Numero de la demande

EP 92 40 1217

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | CHEMICAL ABSTRACTS, vol. 100, no. 24, 11 Juin 1984, Columbus, Ohio, US; abstract no. 194525B, & CS-A-212 962 (V. PROCHAZKA ET AL) 1 Janvier 1984 | 1 | C01B6/21 |
| A | CHEMICAL ABSTRACTS, vol. 86, no. 14, 4 Avril 1977, Columbus, Ohio, US; abstract no. 96970R, D.S. STASINEVICH ET AL: 'Thermochemistry and thermodynamics of high temperature reactions for the formation of alkali metal tetrahydroborates' & Zh. Fiz. Khim. 1976 , vol. 50, no. 12, pages 3109-3111 | 1 | |
| A,D | JOURNAL OF THE AMERICAN CHEMICAL SOCIETY vol. 75, no. 1, 5 Janvier 1953, WASHINGTON,US pages 205 - 209; SCHLESINGER ET AL: 'The preparation of sodium borohydride by the high temperature reaction of sodium hydride with borate esters' * page 208, colonne de droite, ligne 10 - ligne 29 * | 1 | DOMAINES TECHNIQUES RECHERCHES (Int. Cl.5 )<br>C01B |

Le présent rapport a été établi pour toutes les revendications

| Lieu de la recherche | Date d'achèvement de la recherche | Examinateur |
|---|---|---|
| BERLIN | 22 JUIN 1992 | CLEMENT J-P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)